# EUROPÄISCHE PATENTSCHRIFT

(11) **EP 3 140 559 B1**
(45) Veröffentlichungstag und Bekanntmachung des Hinweises auf die Patenterteilung: **30.10.2019**
(21) Anmeldenummer: 15714515.2
(22) Anmeldetag: 09.04.2015
(51) Int. Cl.: F16D 11/14

(54) **VORRICHTUNG ZUR BETÄTIGUNG EINES FORMSCHLÜSSIGEN SCHALTELEMENTS**
DEVICE FOR ACTUATING A FORMFITTING SWITCH ELEMENT
DISPOSITIF D'ACTIONNEMENT D'UN ÉLÉMENT DE COMMANDE À COMPLÉMENTARITÉ DE FORME

(30) Priorität: 09.05.2014 DE 102014208806
(43) Veröffentlichungstag der Anmeldung: 15.03.2017
(73) Patentinhaber: ZF Friedrichshafen AG, 88046 Friedrichshafen (DE)
(72) Erfinder: ZIEMER, Peter, 88069 Tettnang (DE); GEIGER, Andreas, 88677 Markdorf (DE); WIEDENMANN, Bernd, 88069 Tettnang (DE); MORLO, Ralf, 66126 Saarbruecken (DE); VÖLKL, Ralf, 96317 Kronach (DE); MILLER, Tobias, 88289 Waldburg (DE); SCHOIDA, Adalbert, 88094 Oberteuringen (DE)
(86) Internationale Anmeldenummer: PCT/EP2015/057653
(87) Internationale Veröffentlichungsnummer: WO 2015/169525

(56) Entgegenhaltungen:
- EP-A1- 1 790 869
- WO-A1-02/04829
- WO-A1-2013/002706
- US-A- 5 520 272

## Beschreibung

Die Erfindung betrifft eine Vorrichtung zur Betätigung eines formschlüssigen Schaltelements, umfassend eine Hülse aus metallischem Blech sowie einer Schiebemuffe. Die Hülse weist zumindest abschnittsweise einen um eine Achse konzentrischen und ringförmigen Aufbau auf und ist dazu eingerichtet durch eine Verschiebung parallel zur Achse der Hülse das formschlüssige Schaltelement zu öffnen und zu schließen. Die Schiebemuffe weist an deren Innenumfang und/oder Außenumfang eine Klauenverzahnung des formschlüssigen Schaltelements auf. Die Erfindung bezeichnet außerdem ein Verfahren zur Herstellung einer solchen Vorrichtung.

Formschlüssige Schaltelemente finden inzwischen in Getrieben für Kraftfahrzeuge verstärkt Anwendung, da derartige Schaltelemente im Gegensatz zu kraftschlüssigen Schaltelementen deutlich geringere Schleppverluste im offenen Zustand aufweisen und damit den Wirkungsgrad des Getriebes erhöhen. Zur Betätigung derartiger formschlüssiger Schaltelemente ist es bekannt metallische Hülsen einzusetzen, die üblicherweise als Dreh- und Frästeile ausgebildet sind.

Beispielsweise ist aus dem Patent US 7,614,973 B2 ein stufenloses Leistungsverzweigungsgetriebe für ein Kraftfahrzeug bekannt, wobei eine Kopplungs-/Entkopplungseinheit eine mit einer Klauenverzahnung versehene Schiebemuffe enthält, die von einem Hydraulikzylinder in Translationsrichtung verschoben werden kann. Die Schiebemuffe weist Vertiefungen auf, die mit federbelasteten Kugeln zusammenwirken. Eine derartige Schiebemuffe wird aufgrund ihres kompakten zylindrischen Aufbaus bevorzugt durch spanabhebende mechanische Bearbeitung, beispielsweise Drehen und Fräsen, hergestellt. Eine komplexere Geometrie wäre durch solche Fertigungsverfahren jedoch aufwändig herzustellen. Dies würde die Herstellungskosten einer solchen Schiebemuffe erhöhen.

Aus der Fahrradgetriebenabentechnik ist das Patent CH 369036 bekannt. Darin ist eine Ausschaltvorrichtung für ein Klinkengesperre beschrieben, wobei das Klinkengesperre durch eine konische Fläche einer axial verschiebbaren Steuerscheibe außer Eingriff gebracht wird. Die Steuerscheibe mit ihrem konischen Kragen ist dabei aus Blech gestanzt und gezogen. Eine derartige Steuerscheibe der Fahrradgetriebenabe eignet sich vorranging für den Einsatz mit geringer Bauteilbelastung. Bei höheren Belastungen, wie sie beispielsweise in einem Getriebe für Kraftfahrzeuge vorkommen, wäre die Führung über die an der Steuerscheibe ausgebildeten Lappen ungeeignet.

Die Offenlegung DE 10 2005 023 245 A1 lehrt eine Vorrichtung zur aufhebbaren Verriegelung einer Schaltvorrichtung für ein Getriebe, wobei durch axiale Verschiebung einer Schaltstange unterschiedliche Zahnradpaarungen in Eingriff gebracht werden können. Dazu ist die Schaltstange üblicherweise mit einer Schaltgabel verbunden, welche dazu eingerichtet ist eine Schiebemuffe axial zu verschieben. Ein derartiger Aufbau ist jedoch aufwändig und erfordert zahlreiche Einzelteile.

Die Veröffentlichung WO 02/04829 A1 beschreibt eine Schiebemuffe mit einem Muffenkörper und einer Schaltgabelführung, wobei die Schiebemuffe einen aus Blech gefertigten Ring aufweist, welcher am Muffenkörper befestigt ist.

Die Patentschrift US 5,520,272 A lehrt eine Naben-Sperr-Vorrichtung mit einem verschiebbaren Kupplungsring, der an einem Käfig festgesetzt ist.

Die Patentanmeldung EP 1 790 869 A1 beschreibt eine Schiebemuffe für eine Synchronisiereinheit eines Kraftfahrzeug-Schaltgetriebes mit einem Ringkörper, der eine Innenverzahnung und am Außenumfang eine Schaltgabelnut aufweist, wobei der Ringkörper aus zumindest zwei Segmenten zusammengesetzt ist.

Es ist daher eine erste Aufgabe der Erfindung, eine Vorrichtung zur Betätigung eines formschlüssigen Schaltelements bereitzustellen, welche sich durch geringe Herstellungskosten sowie einen zuverlässigen und robusten Aufbau auszeichnet. Eine weitere Aufgabe ist es, ein geeignetes Herstellungsverfahren für eine solche Vorrichtung bereitzustellen.

Die erste Aufgabe wird erfindungsgemäß durch die Merkmale des Patentanspruchs 1 gelöst. Die zweite Aufgabe wird erfindungsgemäß durch die Merkmale des Patentanspruchs 12 gelöst. Vorteilhafte Ausgestaltungen ergeben sich aus den Unteransprüchen, der Beschreibung und den Zeichnungen.

Die Vorrichtung zur Betätigung des formschlüssigen Schaltelements umfasst eine Hülse aus metallischem Blech, welche zumindest abschnittsweise einen um eine Achse konzentrischen und ringförmigen Aufbau aufweist. Das Blech besteht vorzugsweise aus Stahl. Durch Verschiebung der Hülse parallel zur Achse kann zumindest ein formschlüssiges Schaltelement geöffnet und geschlossen werden. Vorzugsweise ist die Hülse dazu eingerichtet ein doppeltwirkendes Schaltelement zu betätigen. Ein doppeltwirkendes Schaltelement umfasst zwei Schaltelemente, wobei beide Schaltelemente eine gemeinsame Schaltelementhälfte aufweisen. Die Vorrichtung umfasst darüber hinaus eine Schiebemuffe, welche am Innenumfang und/oder am Außenumfang eine Klauenverzahnung des formschlüssigen Schaltelements aufweist. Die Schiebemuffe bildet somit eine Schaltelementhälfte.

Erfindungsgemäß ist die Schiebemuffe radial und axial formschlüssig unmittelbar mit der Hülse verbunden. Wird die Hülse entlang der Hülsenachse verschoben, so wird auch die Schiebemuffe verschoben, wodurch die Klauenverzahnung in Eingriff oder außer Eingriff gebracht werden kann. Durch eine derartige zweiteilige Ausführung von Hülse und Klauenverzahnung kann die Hülse als Blechteil ausgeführt sein, während die Klauenverzahnung vorzugsweise durch spanabhebende Bearbeitung hergestellt wird.

In anderen Worten ist die Hülse im Unterschied zum Stand der Technik nicht über mehrere Zwischenelemente, wie beispielsweise eine Schaltgabel, mit der Schiebemuffe verbunden, sondern unmittelbar formschlüssig. Der daraus resultierende Aufbau ist äußerst kompakt und einfach herzustellen.

Vorzugsweise weist die Hülse einen Abschnitt mit mehreren, am Umfang verteilten, in axiale Richtung weisenden Fortsätzen auf. Die Fortsätze sind dazu eingerichtet, durch entsprechende axiale Öffnungen eines Zahnrads oder einer Welle hindurchzuführen, wobei die Schiebemuffe am axial äußeren Ende der Fortsätze angeordnet ist. Derart kann ein Betätigungselement zur Betätigung der Vorrichtung auf einer Seite des Zahnrades oder der Welle angeordnet sein, und die Schiebemuffe auf der gegenüberliegenden Seite. Die Hülse weist dabei selbstverständlich dieselbe Drehzahl auf wie das Zahnrad, bzw. die Welle. Durch die Fortsätze wird eine formschlüssige Verbindung zwischen der Hülse und dem Zahnrad, bzw. der Welle erreicht, durch deren Öffnungen die Fortsätze hindurchgeführt sind. Da die Schiebemuffe samt der darauf ausgebildeten Klauenverzahnung mit der Hülse formschlüssig verbunden ist, ergibt sich im montierten Zustand eine Drehzahlgleichheit von Zahnrad/Welle und der Schiebemuffe. Entlang der Hülsenachse ist die Hülse samt Schiebemuffe dabei weiterhin axial verschiebbar.

Vorzugsweise weist die Schiebemuffe an ihrem Innenumfang mehrere nach innen gerichtete Segmente auf, die beim Zusammenbau mit der Hülse in die Lücken zwischen den Fortsätzen eingreifen. Dadurch wird auf einfache Weise eine radial formschlüssige Verbindung zwischen Schiebemuffe und Hülse gebildet.

Vorzugsweise wird die Schiebemuffe in axialer Richtung zwischen einem auf der Hülse gebildeten Anschlag und einem plastisch verformten Abschnitt der Hülse, durch eine Schnapphakenverbindung oder mittels eines Sprengrings axial auf der Hülse fixiert. Der plastisch verformte Abschnitt kann beispielsweise durch Verstemmen des freien Endes der Hülse realisiert sein. Alternativ dazu können Bereiche am Umfang der Hülse freigeschnitten werden, wobei die freigeschnittenen Bereiche mit Hilfe eines Montagewerkzeugs radial nach außen oder innen durchgesetzt werden. Gemäß einer weiteren Alternative können am freien Ende der Hülse Biegelaschen freigeschnitten werden, welche radial nach außen oder innen aufgebogen werden. Auch ein rechtwinkliges Bördeln des freien Endes der Hülse ist zur axialen Sicherung der Schiebemuffe denkbar.

Gemäß einer Ausführungsform können die Fortsätze im Bereich deren axialem Ende geschlitzt sein. Der Abschnitt der Fortsätze zwischen dem Schlitz und dem axialen Ende der Fortsätze ist dabei in radialer Richtung gebogen. Die Biegerichtung kann nach radial innen oder radial außen gerichtet sein. Durch das Aufbiegen entsteht ein Hinterschnitt, welcher mit einem Sicherungsring zusammenwirken kann, um derart die Schiebemuffe auf der Hülse in axialer Richtung zu sichern.

Gemäß einer alternativen Ausführungsform weisen zumindest zwei der Fortsätze Ausnehmungen auf, welche dazu eingerichtet sind mit einem Sicherungsring zusammenzuwirken um die Schiebemuffe axial auf der Hülse zu fixieren. Die Ausnehmungen erstrecken sich in Umfangsrichtung der Hülse, und sind vorzugsweise als Nuten ausgebildet.

Gemäß einer Variante weist der Sicherungsring an seinem Außenumfang oder an seinem Innenumfang radial hervorstehende Nasen auf, welche im montierten Zustand in die Ausnehmungen eingreifen. Zur Montage wird der Sicherungsring mittels eines geeigneten Werkzeugs elastisch vorgespannt, so dass sich der Sicherungsring je nach Bauweise radial innerhalb der Fortsätze axial in die Hülse einführen lässt, oder radial um die Fortsätze herum auf die Hülse aufbringen lässt. Nach Positionierung des Sicherungsrings auf der Hülse wird der Sicherungsring entlastet, wodurch der Sicherungsring aufgrund seiner Elastizität seine ursprüngliche Form einnimmt. Dabei greifen die Nasen in die Ausnehmungen ein, und sichern so die Schiebemuffe axial auf der Hülse. Bei einem die Fortsätze umgreifenden Sicherungsring mit nach innen gerichteten Nasen besteht die Gefahr eines fliehkraftbedingten Lösens des Sicherungsrings. Daher ist ein solcher Sicherungsring für Anwendungen ohne Drehzahl, bzw. mit nur geringer Drehzahl geeignet. Dafür ist ein solcher Sicherungsring besonders einfach zu montieren. Ein radial innerhalb der Fortsätze angeordneter Sicherungsring ist auch für hohe Drehzahlen geeignet, erfordert jedoch eine etwas aufwändigere Montage.

Gemäß einer weiteren Variante weist der Sicherungsring eine Mehrzahl von Öffnungen mit zumindest einer radialen Abstufung je Öffnung auf. Im montierten Zustand des Sicherungsrings auf der Hülse durchgreifen die Fortsätze die Öffnungen des Sicherungsrings axial. Zur Montage wird der Sicherungsring mittels eines geeigneten Werkzeugs elastisch vorgespannt, sodass sich die Fortsätze in die Öffnungen einführen lassen. Nach Positionierung wird der Sicherungsring entlastet, wodurch der Sicherungsring aufgrund seiner Elastizität seine ursprüngliche Form einnimmt. Bei geeigneter Winkelposition des Sicherungsrings rasten die Abstufungen in den durch die Ausnehmungen freigestellten Bereich der Fortsätze ein, und sichern somit die Schiebemuffe axial auf der Hülse. Da die Fortsätze die Öffnungen des Sicherungsrings durchgreifen ist diese Variante drehzahlfest. Diese Variante ist besonders dann vorteilhaft, wenn aufgrund besonderer Bauraumanforderungen ein radial innerhalb der Fortsätze angeordneter Sicherungsring nicht anwendbar ist, und ein die Fortsätze radial umschließender Sicherungsring mangels Drehzahltauglichkeit nicht anwendbar ist. Die Öffnungen des Sicherungsrings sind idealerweise so gestaltet, dass die Spannung über den Umfang des Sicherungsrings verteilt wird und so die Elastizität des gesamten Rings ausgenutzt werden kann. Dies wird über spezielle Querschnittsgestaltung, konkret über einen veränderlichen Querschnitt entlang des Umfangs des Sicherungsrings erreicht.

Erfindungsgemäß weist die Hülse entlang ihrem Umfang einen integral ausgebildeten Verrastungsabschnitt auf. Dieser Verrastungsabschnitt ist dazu eingerichtet mit einem Rastierungsmechanismus zusammenzuwirken, um derart eine Rastierung der Hülse in axialer Richtung zu bewirken. Die Form des integral ausgebildeten Verrastungsabschnitts ist dabei abhängig von Form und Wirkungsweise des Rastierungsmechanismus.

Gemäß einer möglichen Ausführungsform ist der Verrastungsabschnitt als zumindest eine Nut ausgebildet, welche am Umfang des ringförmigen Abschnitts der Hülse ausgebildet ist. Der Verrastungsabschnitt kann auch mehrere, nebeneinander angeordnete Nuten umfassen. Die Nuten können als Laufbahn für axial und tangential geführte, radial federbelastete Kugeln dienen. Läuft die Kugel in der Nut, so muss zur axialen Verschiebung der Hülse die Kugel gegen die Federkraft aus der Nut gedrückt werden. Durch die integrale Ausbildung der Nut in der Blech-Hülse wird derart eine besonders kostengünstige Vorrichtung mit einer integralen Rastierung geschaffen. Gemäß einer weiteren möglichen Ausführungsform weist die Hülse einen integral ausgebildeten und radial nach außen gerichteten Bund auf. Dieser Bund dient als formschlüssige Schnittstelle zu einem Betätigungselement der Vorrichtung, beispielsweise einer Schaltgabel. Die Schaltgabel ist dazu an ihren Gabelenden mit einem Schlitz versehen, in den der Bund abschnittsweise hineinragt. Durch Verschiebung der Schaltgabel entlang der Achse der Hülse wird die Hülse über die formschlüssige Verbindung zwischen Schaltgabel und Bund mitverschoben. Durch eine derartige Ausgestaltung ist ein Drehzahlunterscheid zwischen einer rotierenden Hülse und der üblicherweise drehfesten Schaltgabel auf einfache Weise ausgleichbar. Vorzugsweise ist zwischen dem Betätigungselement und dem Bund eine Gleitlagerung oder eine Wälzlagerung angeordnet, um die durch die Differenzdrehzahl hervorgerufene Bauteilbelastung zwischen Hülse und Betätigungselement zu reduzieren. Um eine verschleißarme Gleitoberfläche zu erhalten kann der Bund gehärtet ausgeführt sein, beispielsweise durch lokales Induktionshärten oder Nitrieren. Als Gleitlagerung können in den Schlitzen der Schaltgabel befestigte Kunststoffeinsätze vorgesehen sein, die beispielsweise mittels einer Clip-Verbindung an der Schaltgabel befestigt sind. Alternativ dazu können an beiden Stirnflächen des Bunds Gleitlagerringe befestigt sein. Die Wälzlagerung kann durch Nadellager zwischen dem Bund und dem Betätigungselement realisiert sein, wobei vorzugsweise eine Stützscheibe zwischen dem Betätigungselement und dem Nadellager angeordnet ist. Die Stützscheibe ist bevorzugt formschlüssig am Betätigungselement befestigt, und sichert die dem Betätigungselement zugeordnete Lagerlaufbahn des Nadellagers gegen Verdrehung.

Die Hülse wird bevorzugt aus einem zylindrischen Grundkörper als Halbzeug hergestellt, beispielweise durch Ablängen eines Rohrs. Alternativ dazu kann die Hülse auch im Tiefziehverfahren hergestellt werden. Gemäß einer weiteren Alternative kann die Hülse aus einem weitgehend beschnittenen Blech und anschließendem Aufrollen und Verschweißen dieses Blechs hergestellt werden. Es stehen somit verschiedene Fertigungsverfahren zur Herstellung der Hülse zur Auswahl, welche abhängig von der erwarteten Fertigungsstückzahl und den dafür rentablen Werkzeugkosten ausgewählt werden können. Die Fortsätze werden bevorzugt durch Ausschneiden von Bereichen aus einem zuvor ringförmigen Abschnitt gebildet, beispielsweise mittels Keilschieberwerkzeugen in einer Presse. Die Fortsätze schließen daher an den konzentrischen und ringförmigen Abschnitt der Hülse an. Die Schiebemuffe wird auf die Fortsätze der Hülse ausgeschoben, wodurch eine radial formschlüssige Verbindung zwischen der Hülse und der Schiebemuffe gebildet wird. Dies wird vorzugsweise durch radial nach innen gerichtete Segmente der Schiebemuffe erreicht, welche radial in die Lücken zwischen den Fortsätzen eingreifen. Anschließend wird die Schiebemuffe an den freien Enden der Fortsätze axial formschlüssig fixiert.

Die Fortsätze der Hülse können durch axiale Öffnungen eines Zahnrad, bzw. einer Welle hindurchgeführt werden, sodass die Fortsätze an gegenüberliegenden Öffnungen der oben genannten Bauteile herausragen. Die Schaltmuffe wird erst nach erfolgtem Hindurchführen durch diese Öffnungen an der Hülse befestigt. Die Öffnungen können dadurch entsprechend klein gehalten werden, da die Schaltmuffen nicht durch die Öffnungen mit hindurchgeführt werden müssen. Die Vorrichtung eignet sich damit auch für komplexe Geometrien mit engen Bauraumverhältnissen. Vorzugsweise wird zur Herstellung der zumindest einen Nut ein Elastomerelement in den ringförmigen Abschnitt der Hülse eingeführt. Anschließend wird das Elastomerelement durch Belastung in Richtung der Hülsenachse radial nach außen verdrängt, wodurch in die Hülse eine radial nach außen gerichtete Nut gepresst wird. Um der Nut eine vorgegebene Form zu verleihen sind am Außenumfang der Hülse Gegenhalter angeordnet. Eine radial nach innen gerichtete Nut wird vorzugsweise über ein entsprechendes Keilschieberwerkzeug in die Hülse gepresst, wobei je nach Innendurchmesser der Hülse derart auch eine nach außen gerichtete Nut herstellbar ist. Alternativ dazu kann zur Herstellung der zumindest einen Nut über einen Spreizdorn zumindest eine, auf einem gemeinsamen Durchmesser angeordnete, radial beweglich angeordnete Rolle nach außen gegen den Innendurchmesser der Hülse gedrückt werden. Durch eine überlagerte Drehbewegung der Hülse und/oder der zumindest einen Rolle wird derart eine nach außen gerichtete Nut in den Umfang der Hülse eingerollt. Bei hoher Stückzahlerwartung kann die zumindest eine Nut auch durch elektromagnetisches Pulsumformen oder durch Innen- oder Außenhochdruck-Umformen in die Hülse eingebracht werden. Es stehen somit auch für die Herstellung der zumindest einen Nut verschiedene Fertigungsverfahren zur Auswahl, welche abhängig von der erwarteten Fertigungsstückzahl und den dafür rentablen Werkzeugkosten ausgewählt werden können.

Zur Herstellung des Bunds wird bevorzugt ein Elastomerelement in den ringförmigen Abschnitt eingeführt, und anschließend durch Belastung in Richtung der Hülsenachse radial nach außen verdrängt. Dadurch wird in die Hülse eine radial nach außen gerichtete Vertiefung gepresst, welche in einem anschließenden Arbeitsschritt in axialer Richtung zusammengepresst wird. Die derart zusammengepresste Vertiefung bildet den Bund. Die Vertiefung kann anstatt dem Elastomerelement auch durch ein Keilschieberwerkzeug gebildet werden. Diese Möglichkeiten zur Herstellung des Bunds sind vor allem zur Herstellung eines zwischen den axialen Enden der Hülse angeordneten Bunds geeignet. Liegt der Bund unmittelbar an einem axialen Ende der Hülse, so wird dieser bevorzugt durch rechtwinkliges Bördeln dieses Endes hergestellt. Wird die Hülse im Tiefziehverfahren hergestellt, so kann ein am axialen Ende der Hülse angeordneter Bund auch durch Beschneiden des Flansches gebildet werden. Damit stehen auch zur Herstellung des Bunds verschiedene geeignete Herstellungsverfahren zur Verfügung.

Eine erfindungsgemäße Vorrichtung zur Betätigung eines formschlüssigen Schaltelements ist besonders für die Verwendung in einem planetenradsatzbasierenden Getriebe für ein Kraftfahrzeug geeignet. Bei einem planetenradsatzbasierenden Getriebe werden unterschiedliche Übersetzungen zwischen Getriebe-Eingangswelle und Getriebe-Ausgangswelle durch verschiedenartige Verschaltung von Planetenradsatzwellen erzielt. Die Hülse der Vorrichtung kann dabei beispielsweise durch axiale Öffnungen in einem Sonnenrad oder in einem Steg eines der Planetenradsätze hindurchgreifen, und so eine Betätigung eines hinter dem jeweiligen Bauteil angeordneten Schaltelements ermöglichen. Durch die Blechkonstruktion der Hülse ist diese besonders platzsparend, und ermöglicht somit die Betätigung von Schaltelementen auch in besonders engen Bauraumverhältnissen.

Ausführungsbeispiele der Erfindung sind nachfolgend anhand der beigefügten Figuren detailliert beschrieben.
- Fig. 1: zeigt eine erste Ausführungsform der Hülse in einer Schnittdarstellung.
- Fig. 2: zeigt eine zweite Ausführungsform der Hülse.
- Fig. 3: zeigt eine dritte Ausführungsform der Hülse.
- Fig. 4: zeigt eine vierte Ausführungsform der Hülse in einer Schnittdarstellung
- Fig. 5: zeigt eine fünfte Ausführungsform der Hülse zusammen mit einer Schiebemuffe in einer Schnittdarstellung
- Fig. 6: zeigt die erste Ausführungsform der Hülse zusammen mit einem Betätigungselement und einer Gleitlagerung in einer Schnittdarstellung
- Fig. 7: zeigt die erste Ausführungsform der Hülse zusammen mit dem Betätigungselement und einer Wälzlagerung in einer Schnittdarstellung
- Fig. 8: zeigt eine sechste Ausführungsform der Hülse
- Fig. 9: zeigt einen Sicherungsring für die sechste Ausführungsform der Hülse.
- Fig. 10: zeigt den Zusammenbau von Schiebemuffe, Sicherungsring und Hülse gemäß der sechsten Ausführungsform in einer isometrischen Ansicht
- Fig. 11: zeigt den Zusammenbau von Schiebemuffe, Sicherungsring und Hülse gemäß der sechsten Ausführungsform in einer Frontansicht
- Fig. 12: zeigt den Zusammenbau von Schiebemuffe, einem alternativen Sicherungsring und Hülse gemäß der sechsten Ausführungsform in einer isometrischen Ansicht
- Fig. 13: zeigt eine Schnittdarstellung des in Fig. 12 dargestellten Zusammenbaus
- Fig. 14: zeigt einen Sicherungsring mit Durchgangsöffnungen, geeignet für die sechste Ausführungsform der Hülse
- Fig. 15: zeigt den Zusammenbau von Schiebemuffe, Sicherungsring gemäß Fig. 14 und Hülse gemäß der sechsten Ausführungsform in zwei Frontansichten
- Fig. 16: zeigt den Zusammenbau von Schiebemuffe, Sicherungsring gemäß Fig. 14 und Hülse gemäß der sechsten Ausführungsform in einer isometrischen Ansicht
- Fig. 17: zeigt eine Schnittdarstellung des in Fig. 15 dargestellten Zusammenbaus
- Fig. 18: zeigt den Zusammenbau von Schiebemuffe, einem alternativen Sicherungsring und der Hülse gemäß der sechsten Ausführungsform in einer isometrischen Ansicht
- Fig. 19: zeigt eine Schnittdarstellung des in Fig. 18 dargestellten Zusammenbaus
- Fig. 20: zeigt eine Frontansicht des in Fig. 18 dargestellten Zusammenbaus
- Fig. 21: zeigt einen Zusammenbau von Schiebemuffe, Sicherungsring und Hülse einer siebenten Ausführungsform in einer isometrischen Ansicht
- Fig. 22: zeigt eine Schnittdarstellung des in Fig. 21 dargestellten Zusammenbaus
- Fig. 23-25: zeigen Verfahrensschritte zur Herstellung einer Nut in der Hülse

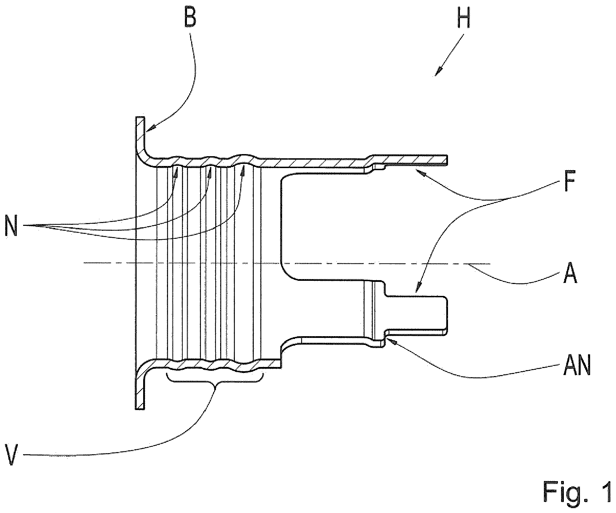

In Fig. 1 ist eine Schnittansicht einer ersten Ausführungsform einer Hülse H dargestellt. Die Hülse H weist einen ringförmigen Abschnitt auf welcher konzentrisch zu einer Achse A ist. In dem ringförmigen Abschnitt ist ein Verrastungsabschnitt V angeordnet, welcher mehrere Nuten N aufweist, die ausgehend vom Innendurchmesser der Hülse H radial nach außen weisen. An einem axialen Ende der Hülse H ist ein Bund B ausgebildet, welcher radial nach außen weist. Am gegenüberliegenden axialen Ende der Hülse H sind mehrere Fortsätze F ausgebildet, die in axiale Richtung weisen. Der Querschnitt der Fortsätze F ist nicht konstant, sondern ab einer definierten Erstreckungsebene reduziert. Dadurch werden Anschläge AN gebildet.

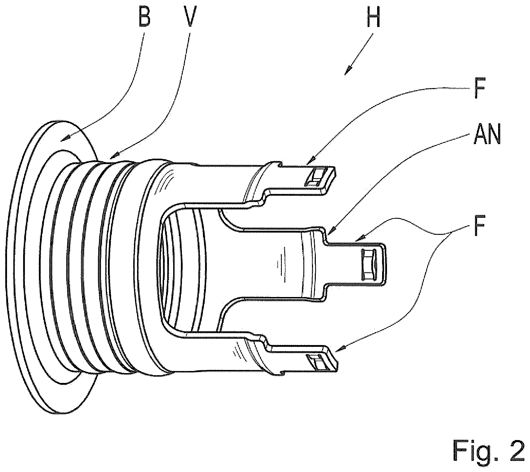

Fig. 2 zeigt eine isometrische Ansicht einer zweiten Ausführungsform der Hülse H. In dieser zweiten Ausführungsform sind am äußeren Ende der Fortsätze F freigeschnittene Bereiche ausgebildet. Eine nicht dargestellte Schiebemuffe M kann derart auf der Hülse H axial befestigt werden, indem die Schiebemuffe M zwischen den Anschlägen AN und plastisch verformten Fortsätzen der freigeschnittenen Bereiche fixiert wird.

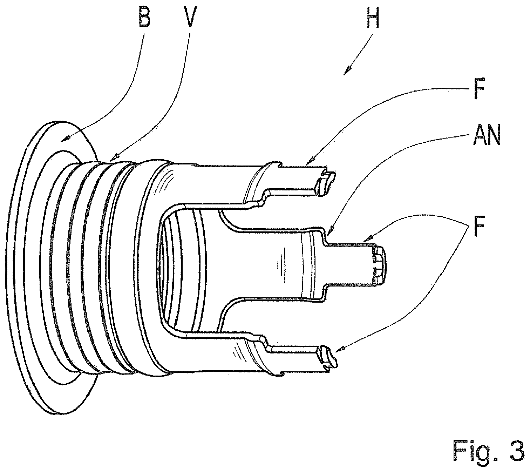

Fig. 3 zeigt eine isometrische Ansicht einer dritten Ausführungsform der Hülse H. Im Unterschied zur zweiten Ausführungsform sind am äußeren Ende der Fortsätze F Biegelaschen angeordnet. Eine nicht dargestellte Schiebemuffe M kann zwischen den Anschlägen AN und radial nach innen oder außen gebogenen Biegelaschen axial fixiert werden.

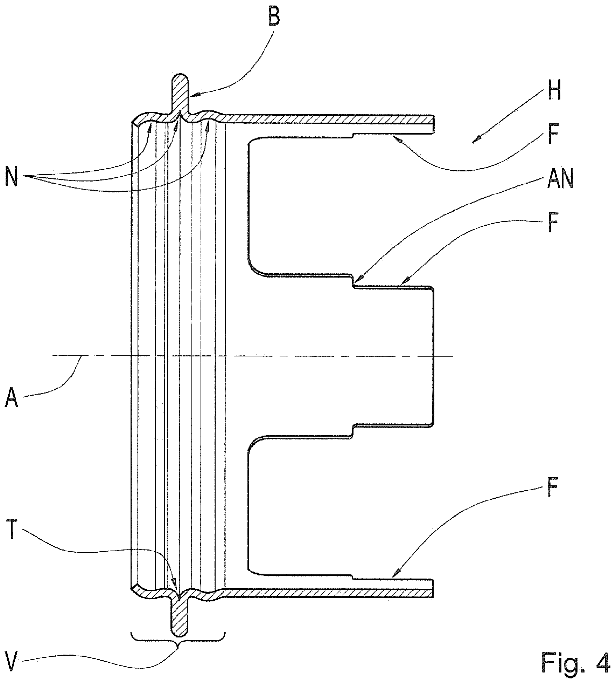

In Fig. 4 ist eine Schnittansicht einer vierten Ausführungsform der Hülse H dargestellt. In dieser vierten Ausführungsform ist der Bund B nicht an einem axialen Ende der Hülse H ausgebildet, sondern innerhalb des ringförmigen Abschnitts der Hülse H mit Abstand zum axialen Ende. Herstellungsbedingt befindet sich im Bereich des Innendurchmessers des Bunds B eine Vertiefung T. Die Vertiefung T wird in dieser Ausführungsform als Nut N des Verrastungsabschnitt V genutzt.

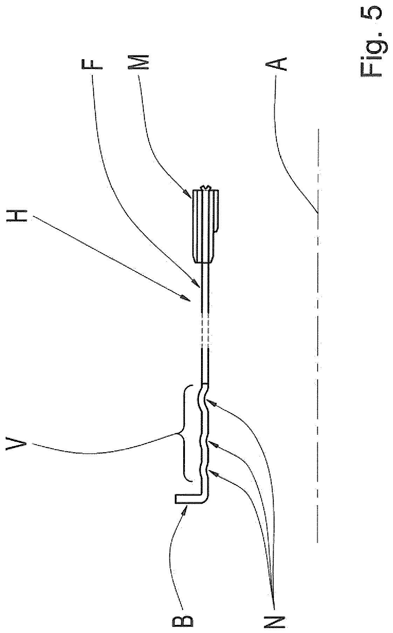

Fig. 5 zeigt eine fünfte Ausführungsform der Hülse H zusammen mit der Schiebemuffe M in einer Schnittdarstellung, wobei nur die obere Hälfte des Schnitts dargestellt ist. In dieser fünften Ausführungsform ist die Schiebemuffe M zwischen den in dieser Schnittebene nicht sichtbaren Anschlägen AN und einer Verstemmung des freien Endes der Fortsätze F fixiert.

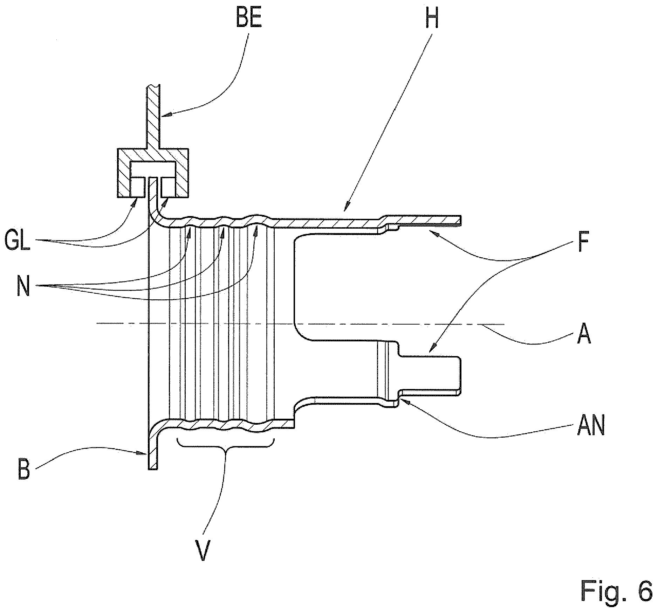

Fig. 6 zeigt die erste Ausführungsform der Hülse H zusammen mit einem Betätigungselement BE und einer Gleitlagerung GL in einer Schnittdarstellung. Das Betätigungselement BE ist als Schaltgabel ausgebildet, und weist zumindest einen Schlitz auf der den Bund B abschnittsweise umgreift. Im Schlitz sind Gleitlager GL befestigt, wobei ein geringfügiges Spiel zwischen den Stirnflächen des Bunds B und den Wirkflächen der Gleitlager GL besteht.

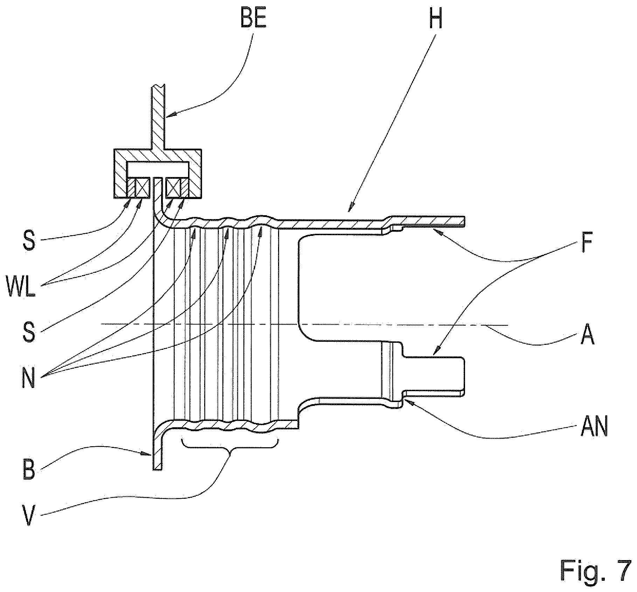

Fig. 7 zeigt die erste Ausführungsform der Hülse H zusammen mit dem Betätigungselement BE und einer Wälzlagerung WL in einer Schnittdarstellung. Das Betätigungselement BE in Form einer Schaltgabel weist zumindest einen Schlitz auf, der den Bund B abschnittsweise umgreift. An beiden Stirnflächen des Bunds B liegen Wälzlager WL an, welche bevorzugt als Nadellager ausgebildet sind. Zwischen den Wälzlagern WL und den Innenflächen des Schlitzes sind Stützscheiben S angeordnet, welche drehfest mit dem Betätigungselement BE verbunden sind. Die Stützscheiben S sind bevorzugt formschlüssig am Betätigungselement BE befestigt, und sichern die dem Betätigungselement BE zugeordnete Lagerlaufbahn der Nadellager WL gegen Verdrehung.

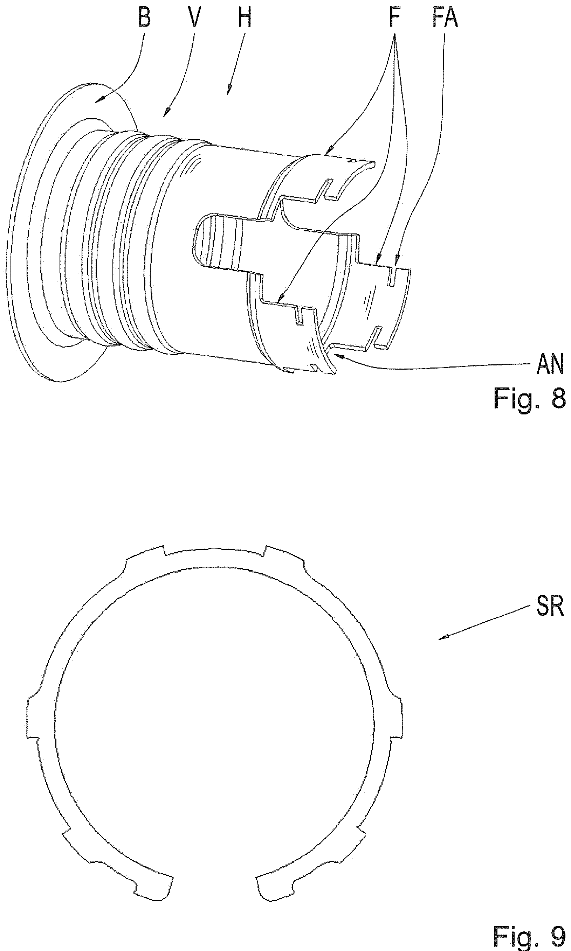

Fig. 8 zeigt eine sechste Ausführungsform der Hülse H. Im Unterscheid zur ersten Ausführungsform weist die Hülse H der sechsten Ausführungsform am Ende der Fortsätze F Ausnehmungen FA auf, welche sich in Umfangrichtung der Hülse H erstrecken. In der gezeigten Ausführung weist jeder Fortsatz F zwei derartige Ausnehmungen FA auf.

Fig. 9 zeigt einen Sicherungsring SR, welche für das Zusammenwirken mit der Hülse H gemäß der sechsten Ausführungsform geeignet ist. Der Sicherungsring SR weist einen offenen Querschnitt auf, und ist mittels eines geeigneten Werkzeugs elastisch komprimierbar, sodass er in den durch die Fortsätze F gebildeten Innendurchmesser einführbar ist. An seinem Außendurchmesser weist der Sicherungsring SR eine Mehrzahl von radial hervorstehenden Nasen auf. Wird der Sicherungsring SR nach Einführen in den Innendurchmesser der Fortsätze F entlastet, dehnt er sich wieder auf, wodurch die Nasen bei geeigneter Winkelposition zwischen Sicherungsring SR und Hülse H in den durch die Ausnehmungen FA gebildeten Hinterschnitt eingreifen.

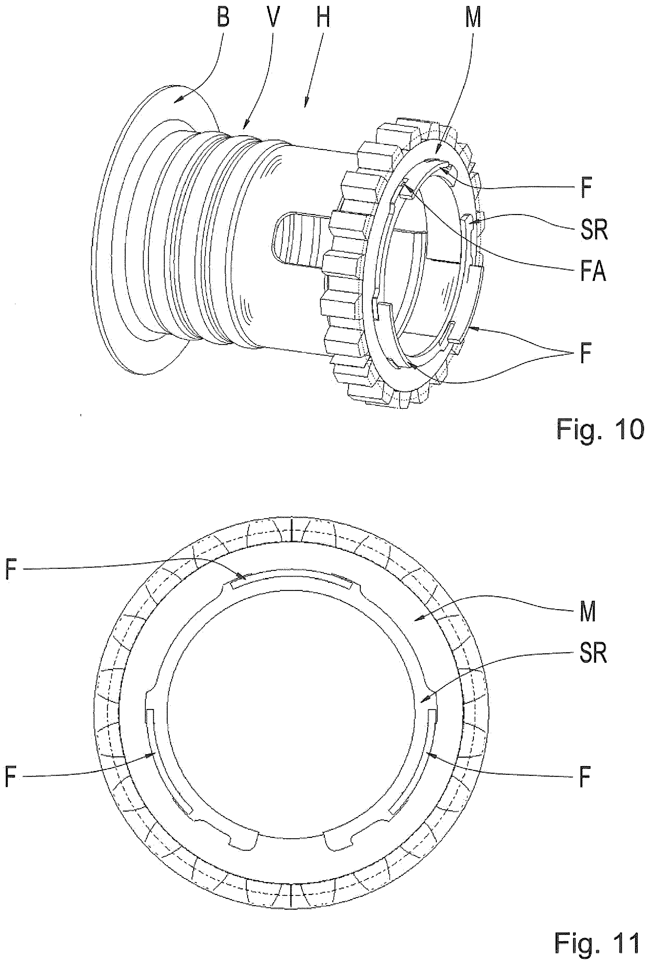

Fig. 10 zeigt den Zusammenbau von Schiebemuffe M, Sicherungsring SR und Hülse H gemäß der sechsten Ausführungsform in einer isometrischen Ansicht. Fig. 11 zeigt den Zusammenbau von Schiebemuffe M, Sicherungsring SR und Hülse H gemäß der sechsten Ausführungsform in einer Frontansicht. Die Schiebemuffe M ist zwischen dem Anschlag AN der Hülse H und dem Sicherungsring SR formschlüssig axial gesichert. Alternativ dazu kann die Schiebemuffe M auch beidseitig mittels Sicherungsring SR gesichert sein. Dies gilt für sämtliche Ausführungsbeispiele und Varianten.

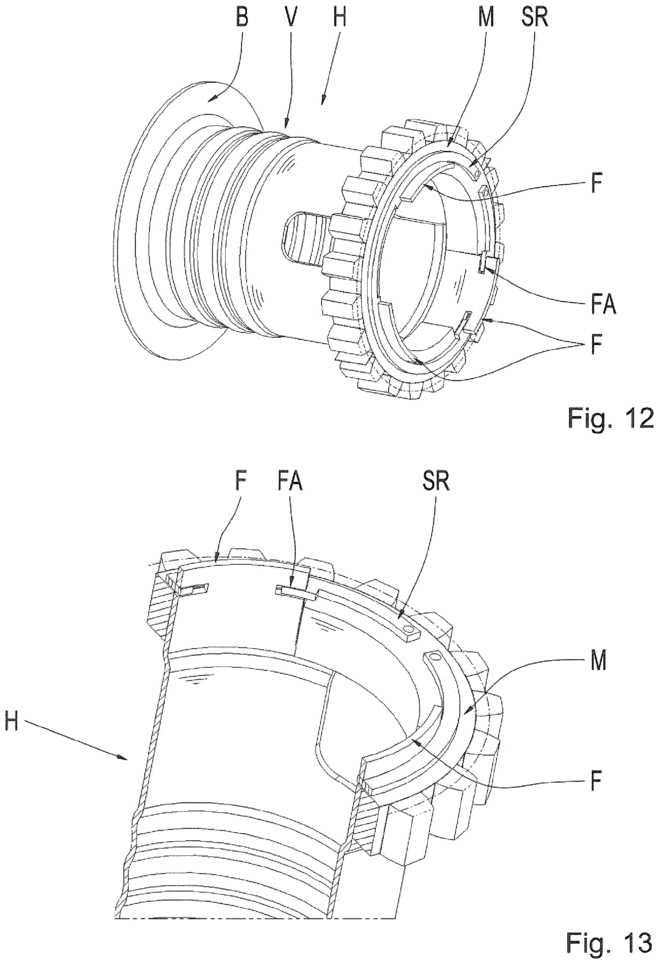

Fig. 12 zeigt den Zusammenbau von Schiebemuffe M, einem alternativen Sicherungsring SR und Hülse H gemäß der sechsten Ausführungsform in einer isometrischen Ansicht. Der Sicherungsring SR umgreift nun die Fortsätze F der Hülse H um deren Außendurchmesser, und weist entsprechende Nasen auf die sich radial vom Innendurchmesser der Sicherungsrings SR nach innen erstrecken. Fig. 13 zeigt eine Schnittdarstellung des in Fig. 12 dargestellten Zusammenbaus, anhand dem die nach innen gerichteten Nasen des Sicherungsrings SR und deren Zusammenspiel mit den Ausnehmungen FA klar erkennbar sind.

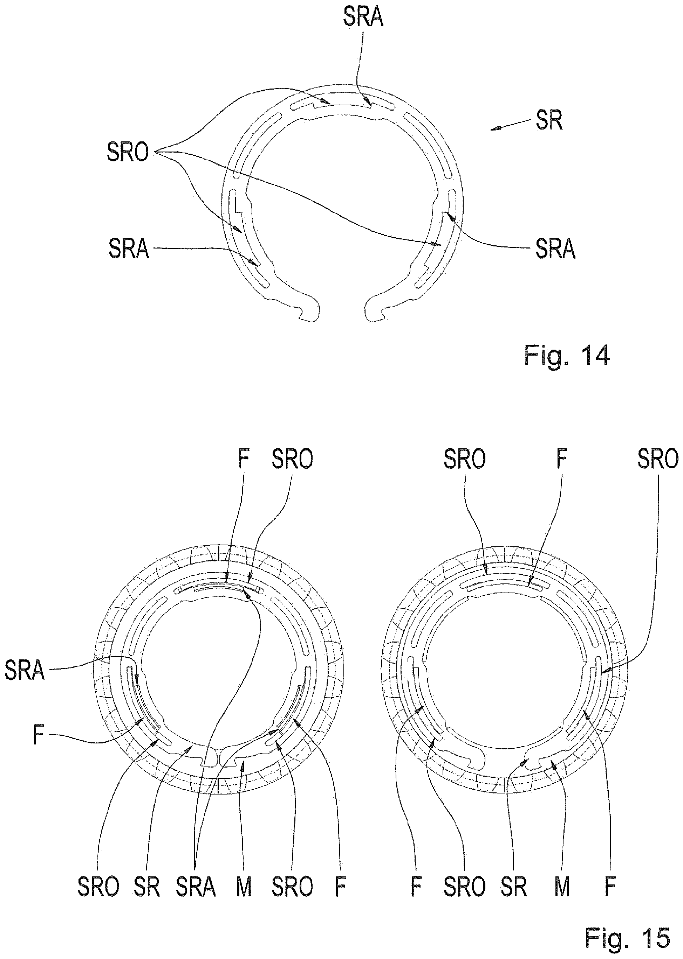

Fig. 14 zeigt eine weitere Variante des Sicherungsrings SR, welcher Öffnungen SRO aufweist und für die Anwendung mit der sechsten Ausführungsform der Hülse H geeignet ist. Die Öffnungen SRO sind so ausgebildet, dass der Sicherungsring SR im vorgespannten Zustand auf die Fortsätze F der Hülse H aufgeschoben werden kann, wobei die Fortsätze F den Sicherungsring SR an den Öffnungen SRO durchgreifen. Die Öffnungen SRO weisen zumindest eine radiale Abstufung SRA auf, welche ausgehend von der Grundform der Öffnungen SRO nach radial innen gerichtet ist.

Fig. 15 zeigt den Zusammenbau von Schiebemuffe M, den Sicherungsring SR gemäß Fig. 14 und Hülse H gemäß der sechsten Ausführungsform in zwei Frontansichten. In der linken Frontansicht ist der Sicherungsring SR in einer elastisch vorgespannten Position zu sehen, in der der Sicherungsring SR auf die Fortsätze F axial aufgeschoben werden kann. In der rechten Frontansicht ist der Sicherungsring SR im montierten Zustand entspannt, wodurch der Sicherungsring SR auffedert sodass die Abstufung SRA der Öffnungen SRO in die Ausnehmungen FA der Fortsätze F einrasten.

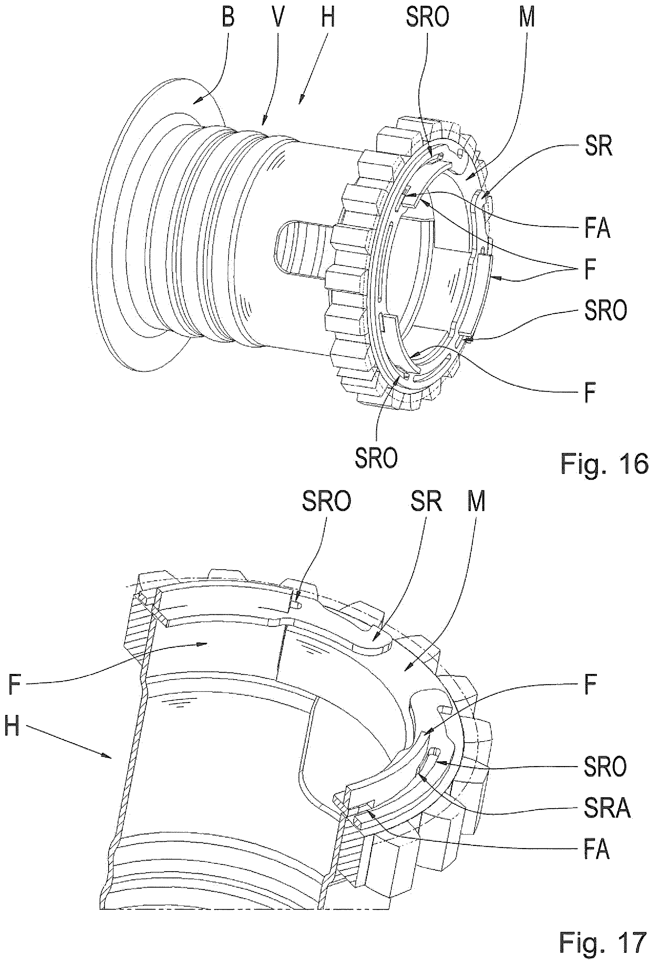

Fig. 16 zeigt den Zusammenbau von Schiebemuffe M, Sicherungsring SR gemäß Fig. 14 und Hülse H gemäß der sechsten Ausführungsform in einer isometrischen Ansicht, während Fig. 17 eine Schnittansicht dieses Zusammenbaus zeigt. In beiden Ansichten ist der Sicherungsring SR im montierten und entlasteten Zustand dargestellt, wobei das Zusammenwirken von Abstufung SRA und Ausnehmungen FA deutlich dargestellt ist.

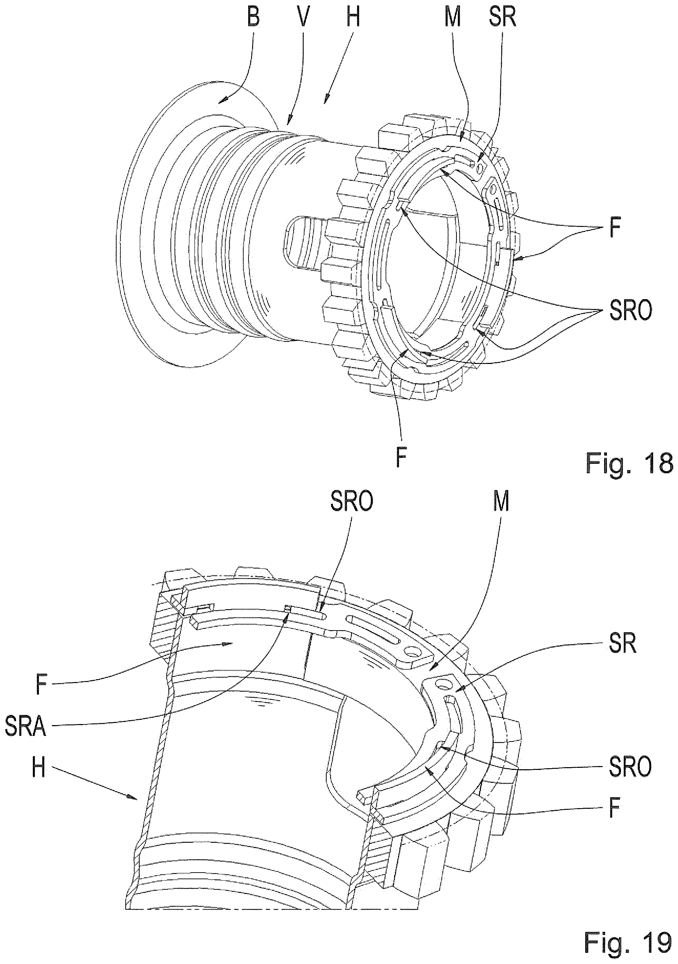

Fig. 18 zeigt den Zusammenbau von Schiebemuffe M, einem alternativen Sicherungsring SR und Hülse H gemäß der sechsten Ausführungsform in einer isometrischen Ansicht. In dieser Bauform des Sicherungsrings SR ist die Abstufung SRA der Öffnungen SRO radial nach außen gerichtet. Dieser Sicherungsring SR federt im entspannten Zustand ein, sodass die Abstufung SRA der Öffnungen SRO in die Ausnehmungen FA der Fortsätze F einrasten.

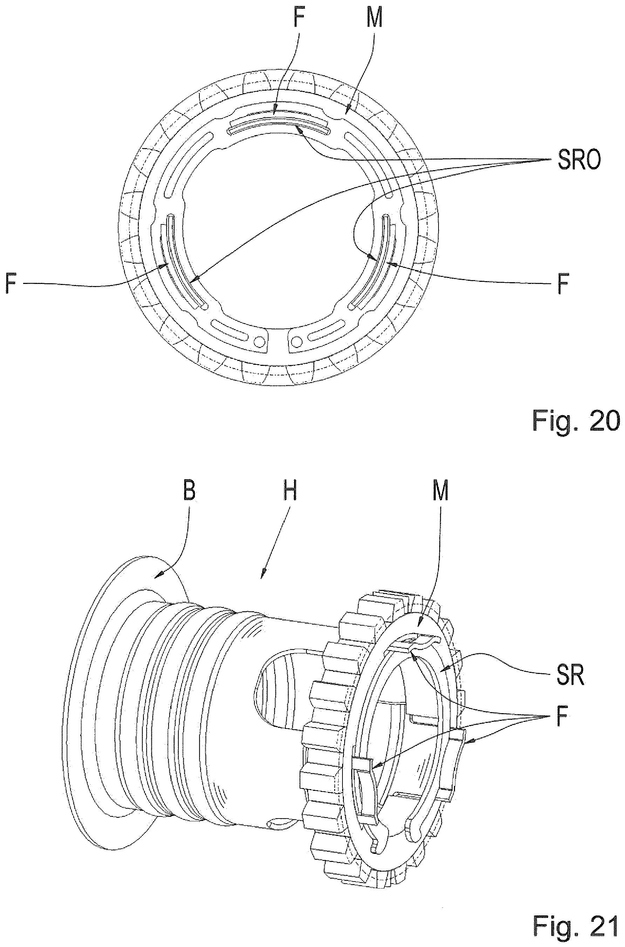

Fig. 19 zeigt eine Schnittansicht des in Fig. 18 dargestellten Zusammenbaus, worin das Zusammenwirken zwischen Ausnehmungen FA und Abstufungen SRA deutlich zu erkennen ist. Fig. 20 zeigt eine Frontansicht des in Fig. 18 dargestellten Zusammenbaus, im entlasteten Zustand des Sicherungsrings SR.

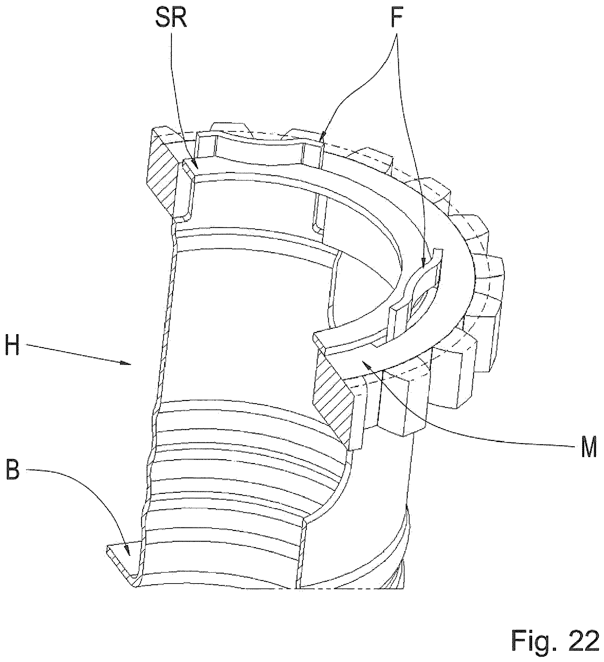

Fig. 21 zeigt einen Zusammenbau von Schiebemuffe M, Sicherungsring SR und Hülse H einer siebenten Ausführungsform in einer isometrischen Ansicht. Die Fortsätze F dieser siebenten Ausführungsform der Hülse H weisen an ihrem Ende einen Schlitz auf. Das axiale Ende der Fortsätze F ist bis zum Schlitz nach radial innen aufgebogen, wodurch ein Hinterschnitt gebildet wird. In diesen Hinterschnitt kann in Sicherungsring SR eingeführt werden, welcher die Schiebemuffe M axial sichert. Fig. 22 zeigt eine Schnittansicht des in Fig. 21 dargestellten Zusammenbaus, worin das Zusammenwirken des Sicherungsrings SR mit dem nach innen gebogenen Ende der Fortsätze F deutlich zu erkennen ist.

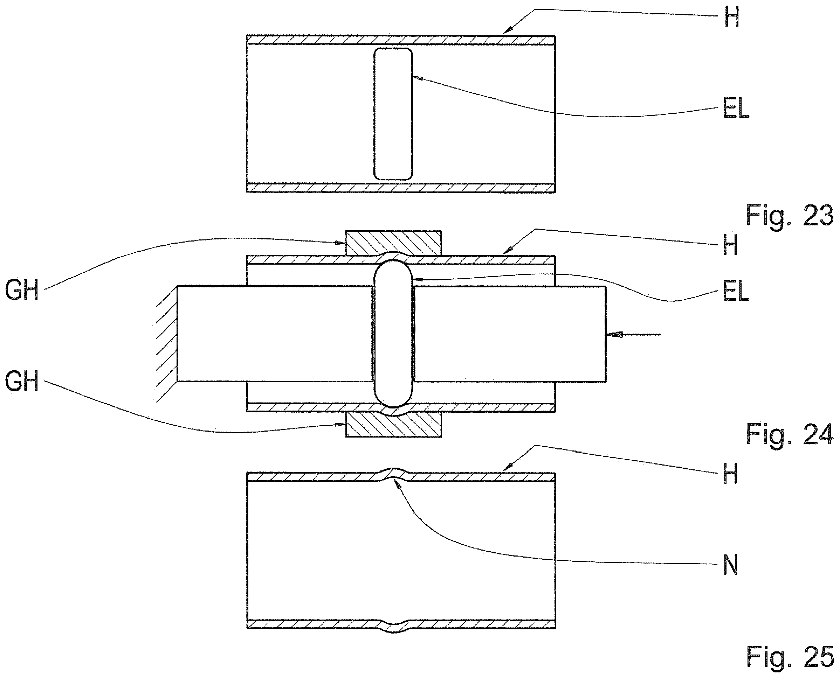

Fig. 23 bis Fig. 25 zeigen verschiedene Verfahrensschritte zur Herstellung einer nach außen gerichteten Nut N der Hülse H. In Fig. 23 weist die Hülse H noch keine Nut N auf. Ein Elastomerelement EL wird in den Innendurchmesser der Hülse H eingebracht. In Fig. 24 wird die Nut N in die Hülse H eingebracht. Dazu wird das Elastomerelement EL durch ein geeignetes Werkzeug in Richtung der Achse A belastet, sodass das Elastomerelement in radiale Richtung ausbaucht. Dabei kommt es in Kontakt mit dem Innendurchmesser der Hülse H. Am Außendurchmesser der Hülse H sind Gegenhalter GH angeordnet. Durch entsprechend hohe Kraft baucht das Elastomerelement derart stark aus, dass es die Hülse H lokal plastisch verformt, wobei die Geometrie der Verformung durch die Gegenhalter GH bestimmt wird. In Fig. 25 ist die Hülse H mit nun eingebrachter, radial nach außen gerichteter Nut N dargestellt.

### Bezugszeichen

- H: Hülse
- N: Nut
- F: Fortsätze
- FA: Ausnehmung
- AN: Anschlag
- A: Achse
- B: Bund
- V: Verrastungsabschnitt
- BE: Betätigungselement
- WL: Wälzlagerung
- GL: Gleitlagerung
- S: Stützscheibe
- SR: Sicherungsring
- SRA: Abstufung
- SRO: Öffnung
- M: Schiebemuffe
- T: Vertiefung
- EL: Elastomerelement
- GH: Gegenhalter

## Patentansprüche

1. Vorrichtung zur Betätigung eines formschlüssigen Schaltelements, umfassend eine Hülse (H) aus metallischem Blech und eine Schiebemuffe (M), wobei die Hülse (H) zumindest abschnittsweise einen um eine Achse (A) konzentrischen und ringförmigen Aufbau aufweist und dazu eingerichtet ist durch eine Verschiebung parallel zur Achse (A) das formschlüssige Schaltelement zu öffnen und zu schließen, und wobei die Schiebemuffe (M) am Innenumfang und/oder am Außenumfang eine Klauenverzahnung des formschlüssigen Schaltelements aufweist, wobei die Schiebemuffe (M) radial und axial formschlüssig mit der Hülse (H) unmittelbar verbunden ist, **dadurch gekennzeichnet, dass** die Hülse (H) entlang ihrem Umfang zumindest einen integral ausgebildeten Verrastungsabschnitt (V) aufweist, der dazu eingerichtet ist mit einem Rastierungsmechanismus zusammenzuwirken um eine Rastierung der Hülse (H) in axialer Richtung zu bewirken.

2. Vorrichtung zur Betätigung eines formschlüssigen Schaltelements nach Anspruch 1, **dadurch gekennzeichnet, dass** die Hülse (H) einen Abschnitt mit mehreren, am Umfang verteilten, in axiale Richtung weisenden Fortsätzen (F) aufweist, wobei die Schiebemuffe (M) am axial äußeren Ende der Fortsätze (F) angeordnet ist.

3. Vorrichtung zur Betätigung eines formschlüssigen Schaltelements nach Anspruch 2, **dadurch gekennzeichnet, dass** die Schiebemuffe (M) zwischen einem auf der Hülse (H) gebildeten Anschlag (AN) und einem plastisch verformten Abschnitt der Hülse (H), einer Schnapphakenverbindung oder mittels eines Sprengrings axial auf der Hülse (H) fixiert ist.

4. Vorrichtung zur Betätigung eines formschlüssigen Schaltelements nach Anspruch 3, **dadurch gekennzeichnet, dass** die Fortsätze (F) im Bereich deren axialen Ende geschlitzt sind, wobei der Abschnitt der Fortsätze (F) zwischen dem Schlitz und dem axialen Ende der Fortsätze (F) gebogen sind um einen Hinterschnitt zu erzeugen, welcher dazu eingerichtet ist mit einem Sicherungsring (SR) zusammenzuwirken.

5. Vorrichtung zur Betätigung eines formschlüssigen Schaltelements nach Anspruch 2, **dadurch gekennzeichnet, dass** zumindest zwei der Fortsätze (F) Ausnehmungen (FA) aufweisen, welche dazu eingerichtet sind mit einem Sicherungsring (SR) zusammenwirken um die Schiebemuffe (M) auf der Hülse (H) axial zu fixieren.

6. Vorrichtung zur Betätigung eines formschlüssigen Schaltelements nach Anspruch 5, **dadurch gekennzeichnet, dass** der Sicherungsring (SR) an seinem Außenumfang oder an seinem Innenumfang radial hervorstehende Nasen aufweist, welche im montierten Zustand des Sicherungsrings (SR) in die Ausnehmungen (FA) eingreifen.

7. Vorrichtung zur Betätigung eines formschlüssigen Schaltelements nach Anspruch 5, **dadurch gekennzeichnet, dass** der Sicherungsring (SR) eine Mehrzahl von Öffnungen (SRO) mit zumindest einer radialen Abstufung (SRA) aufweist, wobei die Fortsätze (F) im montierten Zustand des Sicherungsrings (SR) die Öffnungen (SRO) axial durchgreifen, und wobei im unbelasteten Zustand des Sicherungsrings (SR) die Abstufung (SRA) in die Ausnehmungen (FA) der Fortsätze (FA) eingreift.

8. Vorrichtung zur Betätigung eines formschlüssigen Schaltelements nach einem der vorangehenden Ansprüche, **dadurch gekennzeichnet, dass** der Verrastungsabschnitt (V) als zumindest eine Nut (N) ausgebildet ist, welche am Umfang des ringförmigen Abschnitts der Hülse (H) ausgebildet ist.

9. Vorrichtung zur Betätigung eines formschlüssigen Schaltelements nach einem der Ansprüche 1 bis 8, **dadurch gekennzeichnet, dass** die Hülse (H) einen integral ausgebildeten und radial nach außen gerichteten Bund (B) aufweist, welcher als formschlüssige Schnittstelle zu einem Betätigungselement (BE) der Vorrichtung dient, sodass bei Verschiebung des Betätigungselements (BE) parallel zur Achse (A) die Hülse (H) über den Bund (B) mitverschoben wird.

10. Vorrichtung zur Betätigung eines formschlüssigen Schaltelements nach Anspruch 9, **dadurch gekennzeichnet, dass** die Vorrichtung eine Gleitlagerung (GL) oder eine Wälzlagerung (WL) umfasst, welche zwischen dem Bund (B) und dem Betätigungselement (BE) angeordnet ist.

11. Vorrichtung zur Betätigung eines formschlüssigen Schaltelements nach Anspruch 10, **dadurch gekennzeichnet, dass** die Wälzlagerung (WL) durch Nadellager ausgebildet ist, wobei zwischen dem Nadellager und dem Betätigungselement (BE) eine Stützscheibe (S) angeordnet ist, welche mittels Formschluss am Betätigungselement (BE) befestigt und derart gegen Verdrehen gesichert ist.

12. Verfahren zur Herstellung einer Vorrichtung zur Betätigung eines formschlüssigen Schaltelements nach einem der Ansprüche 2 bis 11, **dadurch gekennzeichnet, dass** die Hülse (H) aus einem zylindrischen Grundkörper, mittels Tiefziehen, oder mittels Aufrollen und Verschweißen eines beschnittenen Blechs hergestellt wird, die Schiebemuffe (M) auf die Fortsätze (F) der Hülse (H) aufgeschoben wird wodurch eine radial formschlüssige Verbindung zwischen Schiebemuffe (M) und Hülse (H) gebildet wird, und anschließend die Schiebemuffe (M) an den freien Enden der Fortsätze (F) axial formschlüssig fixiert wird.

13. Verfahren zur Herstellung einer Vorrichtung zur Betätigung eines formschlüssigen Schaltelements nach Anspruch 12 unter Rückbezug auf Anspruch 8, **dadurch gekennzeichnet, dass** zur Herstellung der zumindest einen Nut (N)
- ein Elastomerelement (EL) in den ringförmigen Abschnitt der Hülse (H) eingeführt wird, wobei das Elastomerelement (EL) durch Belastung in Richtung der Achse (A) radial nach außen verdrängt wird, wodurch in die Hülse (H) eine radial nach außen gerichtete Nut (N) gepresst wird, wobei am Außenumfang der Hülse (H) Gegenhalter (GH) angeordnet sind um der Nut (N) eine vorgegebene Form zu geben, oder
- ein entsprechend geformtes Keilschieberwerkzeug in die Hülse (H) gepresst wird, oder
- über einen Spreizdorn zumindest eine, auf einem gemeinsamen Durchmesser angeordnete, radial beweglich angeordnete Rolle nach außen gegen den Innendurchmesser des ringförmigen Abschnitts der Hülse (H) gedrückt wird, und dabei durch eine überlagerte Drehbewegung die zumindest eine Nut (N) in die Hülse (H) eingerollt wird.

14. Verfahren zur Herstellung einer Vorrichtung zur Betätigung eines formschlüssigen Schaltelements nach Anspruch 12 unter Rückbezug auf Anspruch 8, **dadurch gekennzeichnet, dass** die zumindest eine Nut (N) durch elektromagnetisches Pulsumformen, durch Innenhochdruck-Umformen oder Außenhochdruck-Umformen in die Hülse (H) eingebracht wird.

15. Verfahren zur Herstellung einer Vorrichtung zur Betätigung eines formschlüssigen Schaltelements nach einem der Ansprüche 12 bis 14, **dadurch gekennzeichnet, dass** zur Herstellung des Bunds (B) ein Elastomerelement (EL) in den ringförmigen Abschnitt der Hülse (H) eingeführt wird, wobei das Elastomerelement (EL) durch Belastung in Richtung der Achse (A) radial nach außen verdrängt wird, wodurch in die Hülse (H) eine nach radial außen gerichtete Vertiefung (T) gepresst wird, und wobei die Vertiefung (T) anschließend zusammengepresst wird.

16. Verfahren zur Herstellung einer Vorrichtung zur Betätigung eines formschlüssigen Schaltelements nach einem der Ansprüche 12 bis 14, **dadurch gekennzeichnet, dass** zur Herstellung des Bunds (B) die radial nach außen gerichtete Vertiefung (T) mittels eines Keilschieberwerkzeugs in den ringförmigen Abschnitt der Hülse (H) gepresst wird, und wobei die Vertiefung (T) anschließend zusammengepresst wird.

17. Planetenradsatzbasierendes Getriebe für ein Kraftfahrzeug mit zumindest einem formschlüssigen Schaltelement, wobei das Getriebe eine Vorrichtung zur Betätigung des formschlüssigen Schaltelements nach einem der Ansprüche 1 bis 11 umfasst.

## Claims

1. Device for activating a form-fitting switching element, comprising a sleeve (H) from metallic sheet and a sliding bushing (M), wherein the sleeve (H) at least in portions has a construction which concentric with and annular to an axis (A) and by way of repositioning parallel to the axis (A) is specified for opening and closing the form-fitting switching element, and wherein the sliding bushing (M) on the internal circumference and/or on the external circumference has a claw toothing of the form-fitting switching element, wherein the sliding bushing (M) axially and radially is connected directly to the sleeve (H) in a form-fitting manner, **characterized in that** the sleeve (H) along the circumference thereof has at least one integrally configured latching portion (V) which is specified for interacting with a latching mechanism so as to effect latching of the sleeve (H) in the axial direction.

2. Device for activating a form-fitting switching element according to Claim 1, **characterized in that** the sleeve (H) has a portion having a plurality of appendages (F) that are distributed on the circumference and point in the axial direction, wherein the sliding bushing (M) is disposed on the axially outer end of the appendages (F).

3. Device for activating a form-fitting switching element according to Claim 2, **characterized in that** the sliding bushing (M) is fixed axially on the sleeve (H) between a detent (AN) that is formed on the sleeve (H) and a plastically deformed portion of the sleeve (H), of a latching-hook connection or by means of a circlip.

4. Device for activating a form-fitting switching element according to Claim 2, **characterized in that** the appendages (F) in the region of the axial ends thereof are slotted, wherein the portion of the appendages (F) between the slot and the axial end of the appendages (F) is bent so as to generate an undercut which is specified for interacting with a securing ring (SR).

5. Device for activating a form-fitting switching element according to Claim 3, **characterized in that** at least two of the appendages (F) have recesses (FA) which are specified for interacting with a securing ring (SR) so as to axially fix the sliding bushing (M) on the sleeve (H).

6. Device for activating a form-fitting switching element according to Claim 5, **characterized in that** the securing ring (SR) on the external circumference thereof, or on the internal circumference thereof, has radially projecting cams which in the assembled state of the securing ring (SR) engage in the recesses (FA).

7. Device for activating a form-fitting switching element according to Claim 5, **characterized in that** the securing ring (SR) has a plurality of openings (SRO) having at least one radial grading (SRA), wherein the appendages (F) in the assembled state of the securing ring (SR) axially penetrate the openings (SRO), and wherein the grading (SRA) in the non-stressed state of the securing ring (SR) engages in the recesses (FA) of the appendages (FA).

8. Device for activating a form-fitting switching element according to one of the preceding claims, **characterized in that** the latching portion (V) is configured as at least one groove (N) which is configured on the circumference of the annular portion of the sleeve (H).

9. Device for activating a form-fitting switching element according to one of Claims 1 to 8, **characterized in that** the sleeve (H) has an integrally configured and radially outward directed collar (B) which serves as a form-fitting interface to an activation element (BE) of the device such that the sleeve (H) by way of the collar (B) is conjointly repositioned when repositioning the activation element (BE) parallel to the axis (A).

10. Device for activating a form-fitting switching element according to Claim 9, **characterized in that** the device has a friction-bearing mounting (GL) or a roller-bearing mounting (WL) which is disposed between the collar (B) and the activation element (BE) .

11. Device for activating a form-fitting switching element according to Claim 10, **characterized in that** the roller-bearing mounting (WL) is configured by a needle bearing, wherein a support disc (S) which by means of a form-fit is fastened to the activation element (BE) and in this manner is secured against rotation is disposed between the needle bearing and the activation element (BE).

12. Method for producing a device for activating a form-fitting switching element according to one of Claims 2 to 11, **characterized in that** the sleeve (H) is produced from a cylindrical basic body by means of deep-drawing, or by means of rolling-up and welding a cut-to-size metal sheet; the sliding bushing (M) is push-fitted onto the appendages (F) of the sleeve (H), on account of which a radially form-fitting connection between the sliding bushing (M) and the sleeve (H) is formed; and the sliding bushing (M) is subsequently axially fixed in a form-fitting manner at the free ends of the appendages (F).

13. Method for producing a device for activating a form-fitting switching element according to Claim 12, with reference to Claim 8, **characterized in that** in the production of the at least one groove (N)
- an elastomer element (EL) is introduced into the annular portion of the sleeve (H), wherein the elastomer element (EL) by loading in the direction of the axis (A) is displaced radially outward, on account of which a radially outward directed groove (N) is pressed into the sleeve (H), wherein counter holders (GH) for imparting a predefined shape to the groove (N) are disposed on the external circumference of the sleeve (H); or
- a correspondingly shaped tapered slide tool is pressed into the sleeve (H); or
- at least one roller that is disposed so as to be radially movable on a common diameter is pushed outward against the internal diameter of the annular portion of the sleeve (H) by way of an expansion mandrel, and the at least one groove (N) herein is rolled into the sleeve (H) by way of a superimposed rotating movement.

14. Method for producing a device for activating a form-fitting switching element according to Claim 12, with reference to Claim 8, **characterized in that** the at least one groove (N) is incorporated into the sleeve (H) by electromagnetic pulse forming, by internal high pressure forming, or external high pressure forming.

15. Method for producing a device for activating a form-fitting switching element according to one of Claims 12 to 14, **characterized in that** for producing the collar (B) an elastomer element (EL) is introduced into the annular portion of the sleeve (H), wherein the elastomer element (EL) by loading in the direction of the axis (A) is displaced radially outward, on account of which a radially outward directed depression (T) is pressed into the sleeve (H), and wherein the depression (T) is subsequently compressed.

16. Method for producing a device for activating a form-fitting switching element according to one of Claims 12 to 14, **characterized in that** for producing the collar (B) the radially outward directed depression (T) is pressed into the annular portion of the sleeve (H) by means of a tapered slide tool, and wherein the depression (T) is subsequently compressed.

17. Planetary gear set based transmission for a motor vehicle, having at least one form-fitting switching element, wherein the transmission comprises a device for activating the form-fitting switching element according to one of Claims 1 to 11.

## Revendications

1. Dispositif pour actionner un élément de changement de rapport à complémentarité de formes, comprenant une douille (H) en tôle métallique et un manchon coulissant (M), la douille (H) présentant au moins dans certaines portions une structure concentrique et de forme annulaire autour d'un axe (A) et étant conçue pour ouvrir et fermer l'élément de changement de rapport à complémentarité de formes par un coulissement parallèlement à l'axe (A), et le manchon coulissant (M) possédant au niveau du pourtour intérieur et/ou du pourtour extérieur une denture à griffes de l'élément de changement de rapport à complémentarité de formes, le manchon coulissant (M) étant relié directement à la douille (H) par complémentarité de formes dans les sens radial et axial, **caractérisé en ce que** la douille (H) possède le long de son pourtour au moins une portion d'encliquetage (V) formée en tant que partie intégrante, laquelle est conçue pour coopérer avec un mécanisme d'encliquetage afin de provoquer un encliquetage de la douille (H) dans la direction axiale.

2. Dispositif pour actionner un élément de changement de rapport à complémentarité de formes selon la revendication 1, **caractérisé en ce que** la douille (H) possède une portion comprenant plusieurs prolongements (F) distribués sur le pourtour et orientés dans la direction axiale, le manchon coulissant (M) étant disposé au niveau de l'extrémité extérieure axiale des prolongements (F).

3. Dispositif pour actionner un élément de changement de rapport à complémentarité de formes selon la revendication 2, **caractérisé en ce que** le manchon coulissant (M) est immobilisé axialement sur la douille (H) entre une butée (AN) formée sur la douille (H) et une portion déformée plastiquement de la douille (H), d'une liaison par crochets d'encliquetage ou au moyen d'un circlip.

4. Dispositif pour actionner un élément de changement de rapport à complémentarité de formes selon la revendication 3, **caractérisé en ce que** les prolongements (F) sont fendus dans la zone de leur extrémité axiale, la portion des prolongements (F) entre la fente et l'extrémité axiale des prolongements (F) étant courbée afin de produire une contre-dépouille, laquelle est conçue pour coopérer avec un anneau de verrouillage (SR).

5. Dispositif pour actionner un élément de changement de rapport à complémentarité de formes selon la revendication 2, **caractérisé en ce qu'**au moins deux des prolongements (F) possèdent des cavités (FA) qui sont conçues pour coopérer avec un anneau de verrouillage (SR) afin d'immobiliser axialement le manchon coulissant (M) sur la douille (H).

6. Dispositif pour actionner un élément de changement de rapport à complémentarité de formes selon la revendication 5, **caractérisé en ce que** l'anneau de verrouillage (SR) possède sur son pourtour extérieur ou sur son pourtour intérieur des tenons faisant saillie dans le sens radial qui, à l'état monté de l'anneau de verrouillage (SR), viennent en prise dans les cavités (FA) .

7. Dispositif pour actionner un élément de changement de rapport à complémentarité de formes selon la revendication 5, **caractérisé en ce que** l'anneau de verrouillage (SR) possède une pluralité d'ouvertures (SRO) ayant au moins un échelonnement radial (SRA), les prolongements (F), à l'état monté de l'anneau de verrouillage (SR), traversant les ouvertures (SRO) dans le sens axial et, à l'état non sollicité de l'anneau de verrouillage (SR), l'échelonnement (SRA) venant en prise dans les cavités (FA) des prolongements (FA).

8. Dispositif pour actionner un élément de changement de rapport à complémentarité de formes selon l'une des revendications précédentes, **caractérisé en ce que** la portion d'encliquetage (V) est réalisée sous la forme d'au moins une rainure (N) qui est formée sur le pourtour de la portion de forme annulaire de la douille (H) .

9. Dispositif pour actionner un élément de changement de rapport à complémentarité de formes selon l'une des revendications 1 à 8, **caractérisé en ce que** la douille (H) possède une collerette (B) formée en tant que partie intégrante et orientée dans le sens radial vers l'extérieur, laquelle sert d'interface de complémentarité de formes avec un élément d'actionnement (BE) du dispositif, de sorte que lors du coulissement de l'élément d'actionnement (BE) parallèlement à l'axe (A), la douille (H) accompagne le coulissement par le biais de la collerette (B).

10. Dispositif pour actionner un élément de changement de rapport à complémentarité de formes selon la revendication 9, **caractérisé en ce que** le dispositif comporte un palier lisse (GL) ou un palier à roulement (WL) qui est disposé entre la collerette (B) et l'élément d'actionnement (BE).

11. Dispositif pour actionner un élément de changement de rapport à complémentarité de formes selon la revendication 10, **caractérisé en ce que** le palier à roulement (WL) est formé par un roulement à aiguilles, un disque d'appui (S) étant disposé entre le roulement à aiguilles et l'élément d'actionnement (BE), lequel est fixé à l'élément d'actionnement (BE) par complémentarité de formes et ainsi bloqué contre une rotation.

12. Procédé de fabrication d'un dispositif pour actionner un élément de changement de rapport à complémentarité de formes selon l'une des revendications 2 à 11, **caractérisé en ce que** la douille (H) est fabriquée à partir d'un corps de base cylindrique par emboutissage, ou par enroulement et soudage d'une tôle découpée, le manchon coulissant (M) est emmanché sur les prolongements (F) de la douille (H), moyennant quoi un assemblage radial par complémentarité de formes est formé entre le manchon coulissant (M) et la douille (H), et ensuite le manchon coulissant (M) est immobilisé par complémentarité de formes axialement aux extrémités libres des prolongements (F).

13. Procédé de fabrication d'un dispositif pour actionner un élément de changement de rapport à complémentarité de formes selon la revendication 12 en se référant à la revendication 8, **caractérisé en ce que** pour la fabrication de l'au moins une rainure (N),
- un élément élastomère (EL) est introduit dans la portion de forme annulaire de la douille (H), l'élément élastomère (EL) étant refoulé dans le sens radial vers l'extérieur par sollicitation en direction de l'axe (A), moyennant quoi une rainure (N) orientée dans le sens radial vers l'extérieur est pressée dans la douille (H), des paliers de butée (GH) étant disposés au niveau du pourtour extérieur de la douille (H) afin de donner à la rainure (N) une forme prédéfinie, ou
- un outil pour vanne en coin formé en conséquence est pressé dans la douille (H), ou
- au moins un galet monté mobile dans le sens radial, disposé sur un diamètre commun, est poussé vers l'extérieur contre le diamètre intérieur de la portion de forme annulaire de la douille (H) par le biais d'un mandrin d'expansion, et l'au moins une rainure (N) est ainsi formée par roulage dans la douille (H) par un mouvement de rotation superposé.

14. Procédé de fabrication d'un dispositif pour actionner un élément de changement de rapport à complémentarité de formes selon la revendication 12 en se référant à la revendication 8, **caractérisé en ce que** l'au moins une rainure (N) est pratiquée dans la douille (H) par façonnage par impulsions électromagnétiques, par façonnage sous haute pression interne ou par façonnage sous haute pression externe.

15. Procédé de fabrication d'un dispositif pour actionner un élément de changement de rapport à complémentarité de formes selon l'une des revendications 12 à 14, **caractérisé en ce que** pour la fabrication de la collerette (B), un élément élastomère (EL) est introduit dans la portion de forme annulaire de la douille (H), l'élément élastomère (EL) étant refoulé dans le sens radial vers l'extérieur par sollicitation en direction de l'axe (A), moyennant quoi une empreinte (T) orientée dans le sens radial vers l'extérieur est pressée dans la douille (H), et l'empreinte (T) étant ensuite compressée.

16. Procédé de fabrication d'un dispositif pour actionner un élément de changement de rapport à complémentarité de formes selon l'une des revendications 12 à 14, **caractérisé en ce que** pour la fabrication de la collerette (B), l'empreinte (T) orientée dans le sens radial vers l'extérieur est pressée dans la portion de forme annulaire de la douille (H) au moyen d'un outil vanne en coin, et l'empreinte (T) étant ensuite compressée.

17. Boîte de vitesses à base de train planétaire pour un véhicule automobile comprenant au moins un élément de changement de rapport à complémentarité de formes, la boîte de vitesses comprenant un dispositif pour actionner l'élément de changement de rapport à complémentarité de formes selon l'une des revendications 1 à 11.
